(19) Europäisches Patentamt
European Patent Office
Office européen des brevets

(11) **EP 2 352 127 A1**

(12) **EUROPEAN PATENT APPLICATION**

(43) Date of publication:
**03.08.2011 Bulletin 2011/31**

(51) Int Cl.:
***G06T 7/20*** *(2006.01)*

(21) Application number: **09178088.2**

(22) Date of filing: **04.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Nederlandse Organisatie voor Toegepast -Natuurwetenschappelijk Onderzoek TNO 2628 VK Delft (NL)**

(72) Inventor: **Esteban, Isaac 2134 XW Hoofddorp (NL)**

(74) Representative: **Hatzmann, Martin et al Vereenigde Johan de Wittlaan 7 2517 JR Den Haag (NL)**

(54) **Camera movement estimation**

(57) Error propagation of errors in the determination of 3D position information from images captured by a moving camera is carefully controlled. A first, second and third image are captured from successive positions. The first and second images are used to determine information representing distances to objects that are visible at image locations in the first and second image. The second and third images are used to determine at least a direction of the translation between capture of the second and third image, without using the first image in the computation of the direction. Next, the direction of translation from the second and third image is combined with the information representing the distances to estimate the amount of translation. In this way, it is prevented that errors from the combination of the first and second image propagate into errors in the determination of the direction of translation between capture of the second and third image. A cross-influence is allowed only when the amount of translation is subsequently determined, but it has been found that this can be done in a way where ill conditioned error propagation can be avoided.

Fig.1

**Description**

Field of the invention

The invention relates to a system and method for estimating camera movement, such as in a vehicle with a camera mounted on the vehicle.

Background

It is known to use camera images to compute three dimensional models of the environment of the camera. In stereoscopy, for example a pair of cameras at a known spatial offset to each other is used, and the difference between the locations in the images from the camera where matching features are visible is used to compute the distances from the camera to the three dimensional objects that give rise to the features.

Once a three dimensional model is known, it is possible to compute pose changes of a camera form images captured with the camera at different camera poses. As used herein "pose changes" may involve translations and rotations of the camera. After correction for rotation, the parameters of translations can be computed from the difference between the image locations of matching features representing a nearby object, given the three dimensional position of the object. The parameters of rotations can be computed from the overall pattern of changes of the image locations of matching features, or from changes of the image locations where far off objects are visible, usually without requiring a three dimensional model..

The computation of pose changes may use three dimensional models derived from any source, such as from stereoscopic measurements. However, for various reasons it may be advantageous to use images from a single moving camera to obtain the three dimensional model as well. In this case, model construction also involves the determination of the translation and rotation of the camera, to provide a a substitute for the known relative translation and rotation cameras in a stereo pair. Ultimately, this form of model construction works in the same way as for stereoscopy, except that the size of the distance between the positions from which the images are captured remains fundamentally unknown if only image information is used. As a result, measurement scale will be relative to this unknown distance instead of relative to a distance between a pair of stereoscopic cameras. Otherwise, the resulting three dimensional model from images with a moving camera has the same properties as that of a stereoscopic pair, such as greater accuracy for nearby objects etc.

Inevitably the result of this type of computation is subject tot errors, for example due to noise. Noise may result in errors in the measured image locations of matching features, failure to detect some matching features, etc, which in turn results in errors in the estimated parameters of pose changes. It has been found that the use of a three dimensional model obtained from images with a moving camera to determine camera translation parameters gives rise to considerable inaccuracy.

Summary

Among others, it is an object to provide for an improvement in the accuracy of the determination of camera translation using images from a moving camera.

A method according to claim 1 is provided. Herein the propagation of errors is carefully controlled. A first, second and third image are captured from successive positions.

The specific roles of the images in the determination of camera movement are selected to reduce error propagation. The first and second images are used to determine information representing distances to objects that are visible at image locations in the first and second image. The second and third images are used to determine at least a direction of the translation between capture of the second and third image, without using the first image in the computation of the direction. Methods to compute distances and directions of translation from images are known per se. Next, the direction of translation from the second and third image is combined with the information representing the distances to estimate the amount of translation.

By means of this selective way of combining information from different images, it is prevented that errors (e.g. due to noise) from the combination of the first and second image propagate into errors in the determination of the direction of translation between capture of the second and third image. A cross-influence is allowed only when the amount of translation is subsequently determined. This approach reduces the overall errors. Moreover it has been found that in this way the remaining determination of the amount of translation can be reduced to a least square estimation wherein the errors due the combination of the first and second image enter in a well conditioned linear way that prevents unpredictable ill conditioned error propagation. The error is reduced compared to conventional techniques, wherein the direction and size of translation are estimated together by matching the third image to a three dimensional model.

The determination of the amounts of translation may be part of an ongoing process, wherein a succession of an arbitrary number of images is captured, wherein each newly captured image is treated as said third image to determine an amount of movement at a scale defined by processing of previous images.

As used herein, the objects that are visible at image locations may be physical three dimensional objects or the visible objects may be features of physical objects or features of combinations of physical objects that are visible side by side. The determined distances will be relative to a scale that may be unknown, for example relative to an unknown translation distance between capture of the first and second image. The distances may be represented implicitly in terms of coordinates of three dimensional locations of the objects.

The amount of translation may be determined by means of back projection of such three dimensional locations and comparison of the back projected locations with actual image locations. Accordingly, in an embodiment the computation of the amount of translation comprises selection of a value of the amount of translation along said direction of translation where selection of the value minimizes a deviation between back projections of the three dimensional positions and actual image locations where the objects are visible in the third image.

In an embodiment the information representing the distances that is used to determine the amount of translation may be determined from the first and second image, independent of the third image. Later on, once the amount of translation has been estimated, information obtained using the third image may be used to update the information representing the distances, for example to obtain three dimensional coordinates with improved accuracy. The information representing the distances that is used to determine the amount of translation may comprise such three dimensional coordinates determined from the first and second image as well as further images, for example images captured before the first and second images.

In addition to the direction of translation, camera rotation between capture of the second and third image may be computed from the second and third image independent of the first image. These two quantities may be computed together. This prevents error propagation from the first image. The image locations at which objects are visible represent directions from the camera to the three dimensional locations of the objects. Image locations and these directions will be used interchangeably. Absent camera rotation there is an invariant direction corresponding to the direction of translation. The differences between directions in which objects are visible in the second and third images correspond to radial movements from or toward the invariant direction.

When there is camera rotation, the method may involve determining a transformation of image locations in the third image that correspond to an inverse of the effect of the camera rotation, by searching for a transformation that reduces the difference between image locations in the second and third image to substantially radial motions to or from an invariant point and that corresponds to a rotation. In this case the image location of the resulting invariant point defines the direction of translation between capture of the second and third image. Instead of a transformation of image locations in the third image, a transformation of image locations in the second image or a combination of transformations of image locations in the second and third image may be used to determine the invariant point. A least square fit that minimizes deviations from radial motion may be used to determine parameters of the transformation.

In an embodiment computation of the amount of translation is performed by determining a solution of an equation defining a minimum, as a function of said amount of translation, of a sum of squares of deviations between directions in which the objects are visible in the third image and predictions of these directions based on said distances derived from the first and second images and a translation along said direction of translation derived from the second and third image, with a size of the translation according to said amount of translation.

In an embodiment an image processing system according to claim 6 is provided. Herein error propagation is reduced in the same way as in the method of claim 1. A computer program product, such as a computer readable disk, semi-conductor memory or other computer readable medium or a signal may be provided with a computer program of instructions to make a programmable computer perform this method. The system may be part of a vehicle with a camera, which makes it possible to estimate motion of the vehicle with low error from images captured by the camera during movement of the vehicle.

Brief description of the drawing

These and other objects and advantageous aspects will become apparent from a description of exemplary embodiments, using the following figures.

Figure 1 schematically shows a vehicle with a camera
Figure 2 shows a flow-chart of vehicle a translation estimation
Figures 3a-c illustrate computation of an amount of translation
Figures 4, 4a show a comparison of results of different methods of estimating translation
Figures 5 show a comparison of results of different methods of estimating rotation

Detailed description of exemplary embodiments

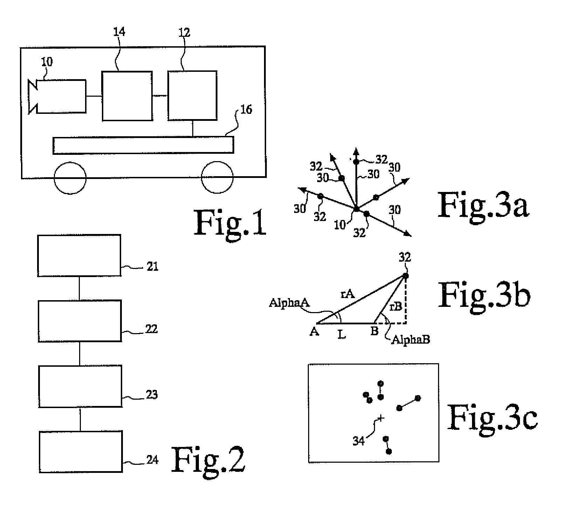

Figure 1 shows a vehicle comprising a camera 10 mounted on the vehicle, a data processor 12, a memory coupled to camera 10 and data processor 12. The vehicle has a drive control unit 16 coupled to data processor 12, comprising a motor and steering gear for example. In operation data processor controls drive control unit 16 to direct movement of the vehicle. Camera 10 captures temporally successive images of an environment of the vehicle, as seen from the vehicle and stores resulting image data in memory 14. Data processor 12 processes the images to determine translation of the vehicle relative to the environment.

Figure 2 shows a flow chart of the determination of translation. By way of example, an embodiment is shown wherein successive translations are determined in cycles of processing that each use of respective pair of images that have been captured temporally successively. Each image pair comprises the most recently captured image of the relevant cycle and the most recently captured image of the previous cycle. In addition, each cycle involves the use of estimated distances to points from the environment that are visible at locations in the most recently captured image of the previous cycle.

In a first step 21 of the cycle, memory 14 has the most recently captured image from the previous cycle in storage. The camera 10 captures a next image and stores it in memory 14 to form an image pair of that next captured image and the most recently captured image of the previous cycle.

In a second step 22 data processor 12 searches for matching image parts in images of the image pair. The search for matching image parts results in a set of location pairs (p1, p2) of locations in the images of the pair at which matching image content was detected. The difference between locations in each location pair is a result of translation and rotation of the vehicle between capturing the images of the image pair. Translation has the effect that the locations at which points of the environment are visible in the images move by smaller or larger amounts dependent on the distance of the points. Rotation has the effect of moving the locations independent on the distance.

In a third step 23 data processor 12 estimates parameters of the rotation and the direction of translation from the location pairs, as will be explained in the following.

The amount of translation L (the size of the translation vector) is estimated separately, in a fourth step 24. In fourth step 24 data processor 12 retrieves distances associated with points visible at the image locations in the oldest image of the image pair, obtained from a previous processing cycle. From these distances and the location pairs (p1, p2) for the current cycle, data processor 12 estimates an amount of translation L of the vehicle.

In an embodiment, the distances are defined in terms of three dimensional positions of points that are visible in the images. For any given translation vector, the image locations where these points will be visible can be computed from these three dimensional positions. This is called back projection of points onto back-projected image locations. In the embodiment, back projection is used for translation vectors along the direction of translation that was determined in third step 23. The amount of translation L is estimated by identifying a vector along that direction that minimizes a sum of square differences between the actual image locations p2 in the most recent image where the points are visible and the back-projected image locations p' obtained with the vector. The length of this vector is used as an estimate for the amount of translation L.

In another example of an embodiment, data processor 12 may determine the position of the invariant point in third step 23 and derive the estimation of the amount of translation L from the amounts of radial movement in the location pairs (p1, p2), in directions radiating from the invariant point.

In a fourth step 24 data processor 12 also estimates the distances to the points visible in the most recent image of the image pair, for use in the next cycle. After fourth step 24 the process returns to first step 21, to receive and process a next captured image, using the distances from fourth step 24 to compute the amount of translation L of the vehicle in third step 23.

Figure 3a illustrates the computation of the amount of translation L and the distances. The image locations where points are visible effectively represent measurements of the ray directions 30 from camera 10 in which the points are located. The fact that a point 32 from the environment is visible at an image position means that the point 32 lies in the ray direction 30 corresponding to the image location. Movement of camera 10 has the effect of changing the ray direction 30 in which a point 32 of the environment is visible and thereby its image location.

Figure 3b illustrates the parameters involved in the change of angle of the ray direction, in the case of camera translation from a point A to a point B. At the point A the distance to a point 32 is rA and the angle between the direction to the point and the direction of movement is alphaA. Similarly at the point B the distance to a point 32 is rB and the angle between the direction to the point and the direction of movement is alphaB. The distance of translation is L. The triangle formed by the points A, B and X2 has angles alphaA, 180-alphaB and AlphaB-AlphaA and sides L, rB, rA. From the sine rule, which states that the ratio between the sine of the angle at a corner of a triangle and the length of the leg of the triangle facing that corner is the same for all corners, it follows that

$$rB * \sin(alphaB\text{-}alphaA) = L * \sin(alphaA)$$

and

$$rA * \sin(alphaB\text{-}alphaA) = L * \sin(alphaB)$$

From the former relation rB can be determined given L and the angles alphaA, alphaB (i.e. from the image locations where the point X2 is visible in the images from points A and B). From the latter L can be determined given the angles alphaA, alphaB and the distance rA.

Although relations between the parameters of rotation and translation and angles between ray directions have been described, it should be realized that these relations correspond to relations between the parameters of rotation and translation and image locations, because there is a one to one correspondence between ray directions and image locations. Moreover, usually an approximation of the equation for small translation and/or rotation may be used.

In image space, the direction of translation defines an invariant point, that is, an image location (or a notional location in image space outside the image) onto which, absent camera rotation, the same environmental point is projected at both positions A and B, i.e. a point that does not change during translation absent camera rotation.

As shown in figure 3c, translation of the camera without rotation has the effect of changing the angle between the ray direction 30 and the direction of translation. In the case of forward translation these angles grow for all points, the points appearing to flee radially from the invariant location 34, the amount of radial displacement decreasing with three dimensional distance between the point and the camera. Camera rotation adds a rotation of the ray directions around a ray direction that corresponds to a rotation axis. Camera rotation can be performed without translation. In other words, the effect of rotation on the image location where a point is visible does not depend on the translation of the camera or the distance to the point. Conversely camera rotation can be undone by inverse camera rotation or a transformation of image positions corresponding to the inverse camera rotation without translation.

The rotation axis generally will not coincide with the direction of translation. Thus rotation has the effect that the difference between the corresponding positions where corresponding 3D points are imaged in two images from different camera positions is not simply one of radial motion from or toward an invariant point. But there is a transformation of the image positions in one or both of the images, the transformation corresponding to an inverse rotation and reducing the differences between the positions in images from different camera positions to such a radial motion. The determination of depth from a pair of images may comprise first determining this transformation for the pair of images, followed by a determination of depths of individual 3D points, based on the different angles between the direction of the invariant point and the directions in which the 3D is visible in the pair of images. The position of the invariant point corresponds to the direction of translation of the camera position. A best fit to the transformation may be determined, i.e. a transformation that corresponds to a rotation and minimizes deviations of point motion from radial motion from a common invariant point

Successive processing cycles involve a first, second and third image that are captured temporally successively, the first and second image forming a first image pair and the second and third image forming a second image pair. The distance to points visible in the second image are determined from the first image pair, without using the second pair. Similarly, a rotation and a direction of translation between capture of the second and third image is determined from the second pair, without using the first pair. Subsequently the amount of translation is determined from the distances that were obtained from the first and second image and the direction of translation that was determined from the second and third image.

It should be noted that this way of determining distances prevents errors (e.g. due to noise) in the determination of the distances from the first pair from influencing the determination of the rotation and direction of translation from the second pair. A cross-influence is allowed only when the amount of translation is subsequently determined. Thus errors are reduced. Moreover, it has been found that the determination of the translation can be performed in a way in which the errors have a limited effect.

The determination of distance to points visible in the second image involves detecting location pairs in the first and second image where the same point in the environment is visible. From a set of these location pairs for the first image pair, a transformation corresponding to a 3D rotation is estimated. Similarly, this set of location pairs for the first image pair is used to estimate the location of the invariant point. Given the rotation and the invariant point, the angles alpha1=alphaA, alpha2=alphaB between the ray directions corresponding to the locations in a location pair and the direction of translation of the first image pair can be determined. The distance r2=rB to a point that is visible in the second image may be determined according to

$$r2 * \sin(\text{alpha2-alpha1}) = L12 * \sin(\text{alpha1})$$

wherein L12 is the amount of translation between capture of the first and second image that was determined in a previous cycle.

The direction of translation between the images of the second pair is estimated from pairs of image locations of corresponding features in the second image pair, or equivalently pairs of corresponding ray directions, without using the distances determined from the first pair. This may be done for example by estimating the rotation between capture of the second and third image, compensating the measured image locations (ray directions) of one of the second and third image for the effect of the estimated rotation, and determining the location (ray direction) best fitting the intersection of extrapolations of lines through pairs of image locations from the second and third image (arcs on a unit sphere around the camera position and through the ray directions from that position), one of which is compensated for the rotation. This location (ray direction) corresponds to the invariant point.

Given the rotation and the invariant point, the angles alpha2', alpha3 between the ray directions corresponding to the locations in a location pair and the direction of translation of the second image pair can be determined. The amount of translation L23 for the second pair ideally satisfies

$$r2 * \sin(\text{alpha3-alpha2'}) = L23 * \sin(\text{alpha3})$$

Using the distances r2 obtained from the image pair, and the angles alpha2 and alpha3 derived on the basis of the invariant location of the second image, the amount of translation L23 may be estimated. A plurality of location pairs may be used for this computation. In this case the amount of translation L23 may be estimated by minimizing a sum of terms

$$[ L23 * \sin(\text{alpha3}) - r2 * \sin(\text{alpha3-alpha2'}) ]^2$$

summed over the set of location pairs. Herein alpha2 and alpha3 may be derived from the distance of image locations p2, p3 of matching features in the second and third image to the invariant point, or from the lengths of projections of these locations onto a common radial line from the invariant point. The minimum L23 satisfies the expression L23=U/V, where

$$V = \text{Sum} \{ \sin^2(\text{alpha3}) \}$$

and

$$U = \text{Sum} \{ r2 * \sin(\text{alpha3}) * \sin(\text{alpha3-alpha2'}) \}$$

the sums being taken over the set of location pairs. It may be noted that in this way the amount of translation is estimated by solving a linear equation. This has the effect or regularizing error propagation of errors in the distances r2 of individual points. Errors appear only in the numerator of the solution. Ill conditioned error propagation is prevented.

Usually, the effect of camera rotation and translation on an image pair can be approximated in a way that makes it unnecessary to use the angles explicitly. In this case the expressions can be replaced by approximate expressions.

An equivalent computation can be performed by back projection. In the case of back projection, three dimensional positions of the points are first determined from previous images, relative to some scale. For any selectable translation vector, the image locations where these points will be visible can be computed from these three dimensional positions. This computation is called back projection for a selected translation vector.

In an embodiment, back projections are considered for selected translation vectors along the direction of translation that was determined in third step 23, based on three dimensional positions determined independent of the third image, for example from the first and second image and/or earlier images. The amount of translation L is estimated by identifying a vector along that direction of translation that minimizes a sum of square differences between the actual image locations p2 in the most recent (third) image where the points are visible and the back-projected image locations p' obtained with the vector, according to the three dimensional positions. The length of this vector is used as an estimate for the amount of translation L. The length may be selected by solving the length from a linear equation that results from the least square condition of by executing a search algorithm that searches in the space of length values for a value that minimizes the sum of the squares.

Again, it should be noted that in these embodiments the steps of determining of the rotation and the direction of translation from the second image pair are performed independent of the first image pair. This prevents errors (e.g. due to noise) in the determination of the distances from the first pair from influencing the determination of the rotation and direction of translation from the second pair. A cross-influence is allowed only when the amount of translation is subsequently determined. Thus errors are reduced.

Data processor 12 processes the images according to this process. Data processor 12 may comprise modules to determine information representing distances, information representing a direction of translation of the camera and an amount of translation. These may be software modules, data processor comprising one or more programmable processor to execute instructions from these modules. Alternatively, part or all of the modules may be hardware modules, comprising circuits constructed to perform these functions. As used herein language that a module is configured to perform specified functions covers the embodiment that the module is a software module with instructions to make a programmable processor perform the function and an embodiment wherein the module is a logic circuit with a specific circuit structure that performs these functions.

A first module may be provided, configured to compute information representing distances from the camera to objects when the second image was captured, using first differences between image locations where objects are visible in the first and second image. A second module may be provided to compute information representing a direction of translation of the camera relative to the objects along which a position of capturing a third image is reached, the direction being computed from second differences between image locations where the objects are visible in the second and third images, independent of the first image. A third module may be provided configured to determine an amount of translation between capture of the second and third image, the amount being computed from the direction of translation, the information representing distances from the camera to the objects and the image locations of the objects in the third image.

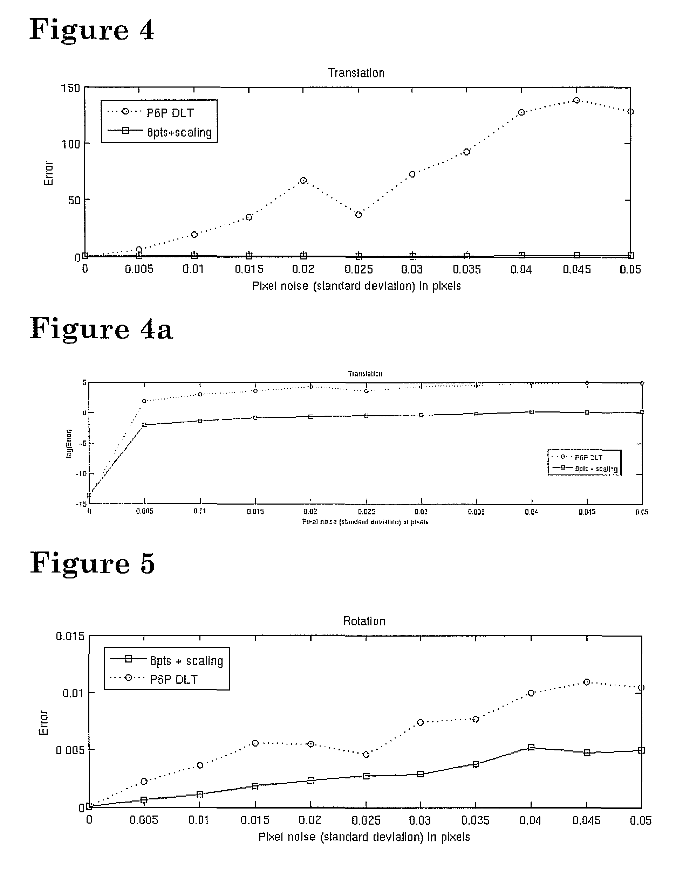

Figures 4, 4a shows a comparison between errors in different methods of computing translation. The error is shown as a function of pixel position noise. In figure 4a the error is shown is on a logarithmic scale. The dashed line shows the error of a reference method, wherein the translation vector (size and direction) and rotation are obtained directly by identifying a vector that minimizes a sum of squared deviations between image locations in the third image and locations in that image predicted from the three dimensional model and the vector. The solid line shows the errors of the present method, using separate determination of the translation direction and third image from the second and third image, without using a three dimensional model, and subsequent determination of the amount of translation L using the distances determined from the first and second image. As can be seen, the present method results in systematically lower errors.

Figure 5 shows a comparison between errors in the camera rotation between capturing different images, determined according to the reference method and the present method. As can be seen the error in the rotation is also reduced.

## Claims

1. A method of measuring movement by means of a camera that is transported by said movement, the method comprising

    - capturing a first, second and third image with said camera temporally successively at mutually different spatial positions;
    - computing information representing distances from the camera to objects when the second image was captured, using first differences between image locations where objects are visible in the first and second image;
    - computing information representing a direction of translation of the camera relative to the objects between capture of the second and third image, using second differences between image locations where the objects are visible in the second and third image, independent of the first image;
    - computing an amount of translation between capture of the second and third image using the information representing a direction of translation of the camera, the information representing distances from the camera to the objects and the image locations in the third image.

2. A method according to claim 1, wherein the information representing distances from the camera comprises representations of three dimensional positions of the objects, the computation of the information representing distances from the camera comprising computing the three dimensional positions from the image locations in the first and second image, and wherein the computation of the amount of translation comprises selection of a value of the amount of translation along said direction of translation where selection of the value minimizes a deviation between back projections of the three dimensional positions and actual image locations where the objects are visible in the third image.

3. A method according to claim 2, wherein the three dimensional positions of the objects are computed from image locations where the objects are visible in a plurality of images including the first and second image and at least one further image, but excluding the third image.

4. A method according to any one of the preceding claims, wherein the computation of the amount of translation is performed by determining a solution of an equation defining a minimum, as a function of said amount of translation, of a sum of squares of deviations between directions in which the objects are visible in the third image and predictions of these directions based on said distances derived from the first and second images and a translation along said direction of translation derived from the second and third image, with a size of the translation according to said amount of translation.

5. A method according to any one of the preceding claims, comprising computing a transformation of image locations of the second and/or third image that substantially reduces the second differences to radial motions to or from an invariant point, independent of the first image, the transformation corresponding to an effect of camera rotation, and determining the direction of translation from the invariant point.

6. An image processing system for measuring camera movement, the system comprising

   - a camera configured to capture successive images;
   - a distance determination module configured to compute information representing distances from the camera to the objects that are visible in the images, from first differences between image locations where objects are visible in a first and second one of the images, independent of a third one of the images;
   - a translation direction determination module, configured to compute information representing a direction of translation of the camera relative to the objects along which a position of capturing the third one of the image is reached, the direction being computed from second differences between image locations where the objects are visible in the second and third one of the images, independent of the first one of the images;
   - a translation amount determination module configured to determine an amount of translation between capture of the second and third one of the images, the amount being computed from the direction of translation, the information representing distances from the camera to the objects and the image locations of the objects in the third one of the images.

7. A system according to claim 6, wherein

   - the distance determination module is configured to compute three dimensional positions of the objects from the image locations in the first and second image, and wherein
   - the translation amount determination module is configured to select a value of the amount of translation along said direction of translation that minimizes a deviation between back projections of the three dimensional positions and actual image locations where the objects are visible in the third image.

8. A system according to claim 7, wherein the distance determination module is configured to compute the three dimensional positions of the objects from image locations where the objects are visible in a plurality of images including the first and second image and at least one further image, but excluding the third image.

9. A system according to any one of the claims 6 to 8, wherein the translation amount determination module is configured to determine a solution of an equation defining a minimum, as a function of said amount of translation, of a sum of squares of deviations between directions in which the objects are visible in the third image and predictions of these directions based firstly on said distances derived from the first and second images and secondly on a translation along said direction of translation derived from the second and third image, with a size of the translation according to said amount of translation.

10. A vehicle, comprising a system according to any one of claims 6 to 9, with the camera mounted directed at an environment of the vehicle.

11. A computer program product, comprising a program of instructions for a programmable computer that, when executed by the programmable computer, will cause the programmable computer to determine movement from camera images from a camera that is transported by said movement, by performing the following steps

    - receiving a first, second and third image from said camera;
    - using first differences between image locations where objects are visible in the first and second image to compute information representing distances from the camera to the objects when the second image was captured, independent of the third image;
    - using second differences between image locations where the objects are visible in the second and third image to compute information representing a direction of translation of the camera relative to the objects between capture of the second and third image, independent of the first image;
    - using the information representing a direction of translation of the camera, the information representing distances from the camera to the objects and image locations in the third image to compute an amount of translation between capture of the second and third image.

Fig.1

Fig.3a

Fig.3b

Fig.2

Fig.3c

# Figure 4

Translation

# Figure 4a

Translation

# Figure 5

Rotation

Europäisches
Patentamt

European
Patent Office

Office européen
des brevets

## EUROPEAN SEARCH REPORT

Application Number

EP 09 17 8088

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/207257 A1 (JUNG SANG-HACK [US] ET AL) 20 August 2009 (2009-08-20)<br>* paragraphs [0002], [0009], [0019] - [0024], [0029] - [0035]; claim 1; figure 2 * | 1-11 | INV.<br>G06T7/20 |
| X | US 2003/044048 A1 (ZHANG ZHENGYOU [US] ET AL) 6 March 2003 (2003-03-06)<br>* paragraphs [0012], [0045], [0046], [0048], [0060], [0103] * | 1-3,6-8, 11 | |
| A | AVIDAN S ET AL: "THREADING FUNDAMENTAL MATRICES"<br>IEEE TRANSACTIONS ON PATTERN ANALYSIS AND MACHINE INTELLIGENCE, IEEE SERVICE CENTER, LOS ALAMITOS, CA, US LNKD-DOI:10.1109/34.899947,<br>vol. 23, no. 1,<br>1 January 2001 (2001-01-01), pages 73-77, XP001008997<br>ISSN: 0162-8828<br>* the whole document * | 1-11 | |
| A | US 2009/279741 A1 (SUSCA SARA [US] ET AL) 12 November 2009 (2009-11-12)<br>* the whole document * | 1-11 | TECHNICAL FIELDS SEARCHED (IPC)<br><br>G06T |
| A | EP 0 786 739 A2 (NEC CORP [JP]) 30 July 1997 (1997-07-30)<br>* the whole document * | 1-11 | |

-/--

The present search report has been drawn up for all claims

| Place of search | Date of completion of the search | Examiner |
|---|---|---|
| Munich | 16 April 2010 | Krawczyk, Grzegorz |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

EP 2 352 127 A1

Europäisches
Patentamt

European
Patent Office

Office européen
des brevets

# EUROPEAN SEARCH REPORT

Application Number

EP 09 17 8088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NISTER D ET AL: "Visual odometry" COMPUTER VISION AND PATTERN RECOGNITION, 2004. CVPR 2004. PROCEEDINGS OF THE 2004 IEEE COMPUTER SOCIETY CONFERENCE ON WASHINGTON, DC, USA 27 JUNE - 2 JULY 2004, IEEE COMPUTER SOCIETY, PISCATAWAY, NJ, USA LNKD- DOI:10.1109/CVPR.2004.1315094, vol. 1, 27 June 2004 (2004-06-27), pages 652-659, XP010708622 ISBN: 978-0-7695-2158-9 * the whole document * ----- | 1-11 | |

TECHNICAL FIELDS
SEARCHED      (IPC)

The present search report has been drawn up for all claims

| Place of search | Date of completion of the search | Examiner |
|---|---|---|
| Munich | 16 April 2010 | Krawczyk, Grzegorz |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

13

**ANNEX TO THE EUROPEAN SEARCH REPORT
ON EUROPEAN PATENT APPLICATION NO.**

EP 09 17 8088

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2010

| Patent document cited in search report | | Publication date | Patent family member(s) | | Publication date |
|---|---|---|---|---|---|
| US 2009207257 | A1 | 20-08-2009 | NONE | | |
| US 2003044048 | A1 | 06-03-2003 | US 2006008121 A1 | | 12-01-2006 |
| | | | US 2005025343 A1 | | 03-02-2005 |
| US 2009279741 | A1 | 12-11-2009 | EP 2116975 A2 | | 11-11-2009 |
| EP 0786739 | A2 | 30-07-1997 | DE 69717176 D1 | | 02-01-2003 |
| | | | DE 69717176 T2 | | 30-04-2003 |
| | | | JP 9219814 A | | 19-08-1997 |
| | | | US 5751838 A | | 12-05-1998 |

For more details about this annex : see Official Journal of the European Patent Office, No. 12/82